# FASCICULE DE BREVET EUROPEEN

(11) **EP 0 694 938 B1**
(45) Date de publication et mention de la délivrance du brevet: **26.08.1998**
(21) Numéro de dépôt: 95410066.5
(22) Date de dépôt: 29.06.1995
(51) Int. Cl.: H01H 9/02, H01H 71/02

(54) **Disjoncteur differentiel multipolaire**
Multipolarer Differentialschalter
Multipolar differential switch

(30) Priorité: 29.07.1994 FR 9409658
(43) Date de publication de la demande: 31.01.1996
(73) Titulaire: SCHNEIDER ELECTRIC SA, 92100 Boulogne Billancourt (FR)
(72) Inventeur: Guillon, Patrick, F-38050 Grenoble Cedex 09 (FR); Sibille, Didier, F-38050 Grenoble Cedex 09 (FR)
(74) Mandataire: Hecké, Gérard

(56) Documents cités:
- EP-A- 0 375 568
- DE-U- 8 708 744
- DE-U- 8 807 464
- FR-A- 2 588 998
- GB-A- 2 099 631

## Description

La présente invention concerne un disjoncteur multipolaire formé par l'assemblage modulaire côte à côte d'un bloc déclencheur différentiel et d'un bloc disjoncteur, et par le raccordement électrique de ces deux blocs au moyen de conducteurs de liaison connectés, au moment dudit assemblage, à des bornes de raccordement assurant la liaison électrique desdits deux blocs, ce disjoncteur étant pourvu d'un cache-bornes agencé pour masquer lesdites bornes de raccordement, lorsque les deux blocs sont assemblés et leur raccordement électrique réalisé, et pourvu d'au moins une ouverture pour l'engagement de moyens de verrouillage.

Un tel disjoncteur est décrit dans la demande de brevet européen publiée sous le No. 0 375 568. Ce disjoncteur comporte un cache-bornes qui est associé à un verrou à travers lequel passe un fil de plombage. Le cache-bornes est mis en place après assemblage du bloc disjoncteur et du bloc différentiel pour assurer l'inviolabilité de l'appareil. Le recours à l'utilisation d'un fil de plombage pour assurer cette fonction d'inviolabilité est gênant pour l'utilisateur, étant donné que le fil de plombage n'est pas fourni avec l'appareil.

La présente invention se propose de pallier ces inconvénients en adoptant des moyens de verrouillage intégrés permettant de remplir les fonctions de masquage des bornes et d'inviolabilité de l'appareil .

Le disjoncteur différentiel multipolaire selon l'invention est caractérisé en ce que lesdits moyens de verrouillage sont agencés pour être prémontés sur le cache-bornes et comportent des moyens d'inviolabilité conçus pour générer une trace visible permanente dans lesdits moyens de verrouillage en cas de démontage.

De manière avantageuse, lesdits moyens de verrouillage peuvent comporter un cavalier composé d'au moins un élément encliquetable dans une ouverture appropriée du cache-bornes. Ce cavalier peut comporter deux éléments encliquetables de longueurs différentes, disposés parallèlement et reliés par une barrette de liaison ou peut être constitué d'un seul élément encliquetable, le cache-bornes comportant une ouverture unique agencée pour que, dans la position de verrouillage dudit cavalier, ledit élément soit entièrement encastré dans ladite ouverture.

L'invention sera mieux comprise en référence à la description de formes de réalisation avantageuses données à titre d'exemples non limitatifs, et au dessin annexé dans lequel :
la figure 1 représente une vue en perspective illustrant le disjoncteur selon l'invention,
les figures 2, 3 et 4 représentent des vues partielles d'une première forme de réalisation des moyens de verrouillage dans trois phases successives de leur mise en place, et
les figures 5, 6 et 7 représentent des vues partielles d'une seconde forme de réalisation des moyens de verrouillage dans trois phases successives de leur mise en place.

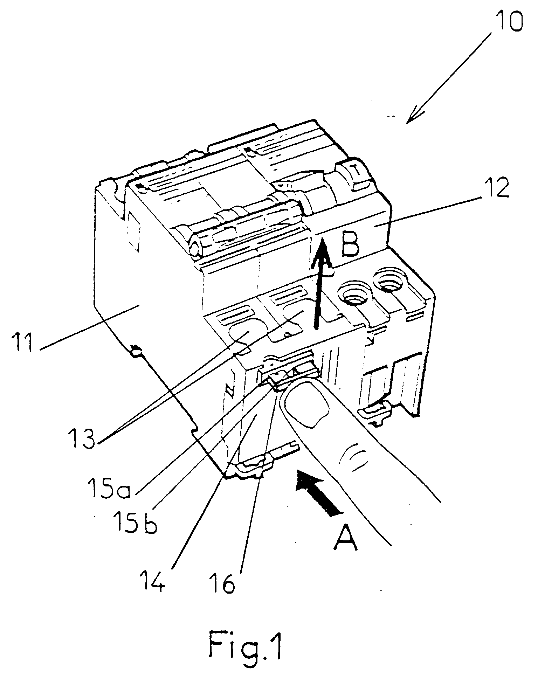

En référence à la figure 1, le disjoncteur différentiel multipolaire 10 représenté comporte un bloc disjoncteur 11 et un bloc déclencheur différentiel 12, ces deux blocs étant du type modulaire, assemblés côte à côte et raccordés électriquement, au moment dudit assemblage, par des conducteurs de liaison connectés d'une part à des bornes de raccordement 13 du bloc disjoncteur et d'autre part à des bornes non apparentes du bloc déclencheur différentiel. Un cache-bornes 14 est adapté sur une zone du bloc disjoncteur de telle manière que l'accès auxdites bornes de raccordement 13 est masqué lorsque les deux blocs sont assemblés et leur raccordement électrique réalisé. Ce cache-bornes est pourvu d'au moins une ouverture 15 et dans le présent cas de deux ouvertures 15a et 15b pour l'engagement de moyens de verrouillage 16. Lorsqu'ils sont poussés dans le sens de la flèche A, ces moyens de verrouillage sont agencés pour s'engager à travers les ouvertures 15a, 15b et pour aboutir dans un dégagement prévu à cet effet dans le corps du bloc disjoncteur. De cette manière, le cache-bornes ne peut pas être retiré par déplacement dans une direction perpendiculaire (flèche B) à celle de la flèche A.

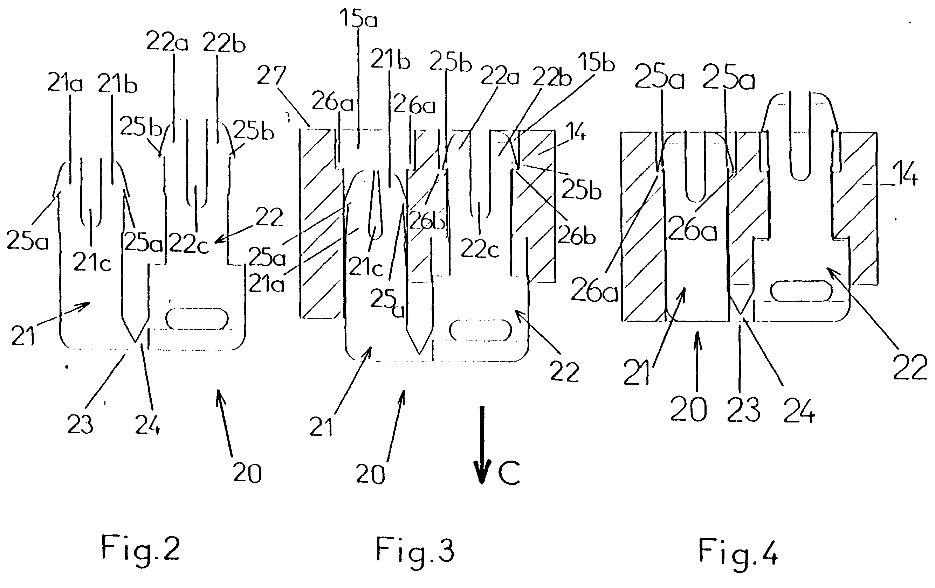

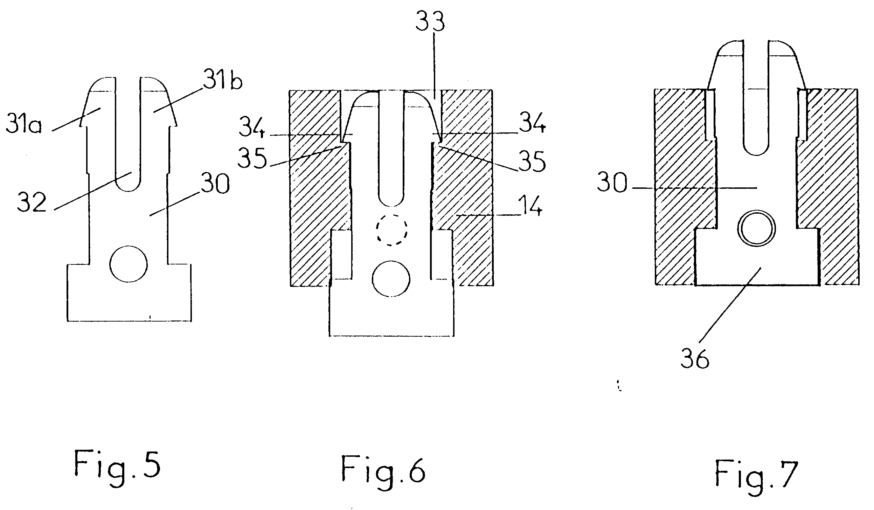

La forme et la fonction des moyens de verrouillage seront décrites plus en détail en référence aux figures 2 à 4 illustrant un premier mode de réalisation et aux figures 5 à 7 illustrant un second mode de réalisation desdits moyens de verrouillage, dans les différentes positions successives qu'ils occupent pendant leur mise en place. Ces moyens de verrouillage sont agencés pour pouvoir être prémontés sur le cache-bornes et sont pourvus de moyens d'inviolabilité du disjoncteur, ayant pour fonction d'empêcher un démontage du cache-bornes sans laisser une trace visible et permanente. En d'autres termes, tout démontage du cache-bornes permettant d'accéder aux bornes 13 génère une trace indélébile qui prouve qu'un démontage a été effectué.

La figure 2 représente une vue en plan de la première forme de réalisation des moyens de verrouillage. Ces moyens sont constitués par un cavalier 20 comprenant essentiellement deux éléments encliquetables 21 et 22 disposés sensiblement parallèlement et reliés à une de leurs extrémités par une barrette de liaison 23 fragilisée dans une zone de moindre résistance 24. Les deux éléments encliquetables 21 et 22 sont de longueurs différentes. Leurs extrémités libres se présentent sous la forme de deux branches respectivement 21a, 21b et 22a, 22b, qui sont séparées par une fente centrale allongée 21c, 22c, ce qui donne à ces branches une certaine flexibilité. En outre, chacune de ces branches comporte un bec latéral 25a, 25b, destiné à coopérer avec un épaulement respectivement 26a, 26b (figure 3) ménagé dans l'épaisseur de la paroi du cache-bornes, à l'intérieur des ouvertures 15a et 15b

Dans une première phase de la mise en place des moyens de verrouillage, illustrée par la figure 3, le cavalier 20 est prémonté dans les ouvertures 15a et 15b du cache-bornes, qui sont agencées pour recevoir respectivement les deux éléments encliquetables 21 et 22. Dans la position représentée par la figure, l'élément encliquetable 22b a traversé la partie la plus importante de l'ouverture 15b, notamment la partie centrale rétrécie de cette ouverture. Pour permettre la pénétration dans cette partie centrale rétrécie, l'extrémité de cet élément, notamment les bords extérieurs des branches 22a et 22b, est arrondie et définit une sorte de rampe d'appui qui assure, en coopération avec les parois du cache-bornes entourant l'ouverture, la flexion de ces branches en les rapprochant l'une de l'autre. Lorsque l'engagement de l'élément encliquetable est suffisamment avancé, les becs 25b dépassent les épaulements correspondants 26b, ce qui libère les deux branches qui reprennent leur position initiale, grâce à leur flexibilité. Dans cette position, que l'on peut appeler position de prémontage, le cavalier 20 est prémonté sur le cache-bornes, mais n'assume pas encore sa fonction de verrouillage du fait que l'extrémité de l'élément encliquetable 22, qui est le plus long, ne dépasse pas la paroi arrière 27 du cache-bornes 14. En revanche, le prémontage est assuré du fait que ce cavalier ne peut plus être dégagé par une simple traction dans le sens de la flèche C hors des ouvertures du cache-bornes, les becs 25b étant en appui contre les épaulements 26b. On notera par ailleurs que l'élément encliquetable 21, qui a la même géométrie que celle de l'élément encliquetable 22, est engagé dans l'ouverture 15a, les branches 21a et 21b, qui constituent son extrémité, étant resserrées en raison de l'appui des becs 25a sur la paroi intérieure de cette ouverture.

Le cache-bornes étant en place, si l'opérateur engage complètement le cavalier 20 dans ses ouvertures, l'élément encliquetable 22 s'introduit, par son extrémité libre, dans un dégagement (non représenté) du bloc disjoncteur, empêchant ainsi un retrait du cache-bornes. Lorsque ce cavalier est poussé à fond comme représenté sur la figure 4, l'élément encliquetable 21 est engagé à fond dans l'ouverture 15a et les becs 25a sont retenus par les épaulements 26a, de sorte que le cavalier est bloqué en position de verrouillage.

Les deux éléments encliquetables ont donc chacun un rôle distinct. L'élément 22 permet tout d'abord d'assurer le prémontage du cavalier sur le cache-bornes. Ensuite, cet élément assure le verrouillage du cache-bornes sur le bloc disjoncteur. L'élément 21 a pour fonction de bloquer le cavalier en position de verrouillage et d'empêcher le retrait volontaire ou accidentel du cavalier. Enfin, la barrette de liaison 23 pourvue de la zone fragilisée 24 a pour fonction d'assurer l'inviolabilité du système. En effet, si malgré le blocage du cavalier, un opérateur veut déverrouiller le cache-bornes, il est contraint de briser la barrette 23 pour désolidariser les deux éléments encliquetables 21 et 22, de retirer l'élément 22 jusque dans sa position représentée par la figure 3 et de laisser en place l'élément 21 qui est bloqué. Cette cassure de la barrette de liaison constitue une trace visible permanente qui atteste qu'un démontage du cache-bornes a eu lieu. De ce fait, la zone fragilisée 24 et la barrette de liaison constituent lesdits moyens d'inviolabilité desdits moyens de verrouillage.

Les figures 5 à 7 illustrent un deuxième mode de réalisation dans lequel le cavalier assurant le verrouillage est constitué d'un seul élément encliquetable 30 qui présente une forme géométrique sensiblement identique à celle des éléments encliquetables 21 et 22. En effet, il comporte à son extrémité deux branches 31a, 31b séparées par une fente allongée 32.

Pour permettre d'assurer une position de prémontage de l'élément encliquetable 30 dans une ouverture appropriée 33 du cache-bornes 14, les branches 31a, 31b comportent deux becs latéraux 34 qui coopèrent, comme le montre la figure 6, avec deux épaulements 35 ménagés dans les parois latérales de l'ouverture 33. Lorsque l'opérateur veut verrouiller le cache-bornes, il pousse l'élément 30 à fond, de telle manière que son extrémité pénètre dans un dégagement (non représenté) du disjoncteur. Dans cette position, illustrée par la figure 7, l'extrémité arrière 36 est complètement encastrée dans l'ouverture du cache-bornes. De ce fait, l'élément 30, qui constitue le cavalier de verrouillage ne peut être extrait qu'avec un outil pointu, tel que par exemple un tournevis ou similaire, qui doit être engagé entre la paroi de l'ouverture et l'extrémité arrière 36, ce qui laisse obligatoirement une trace indélébile attestant que le cache-bornes a été démonté.

Dans les deux cas, le but recherché a été atteint, de sorte que l'invention remplit pleinement ses objectifs.

## Revendications

1. Disjoncteur différentiel multipolaire formé par l'assemblage modulaire côte à côte d'un bloc déclencheur différentiel (12) et d'un bloc disjoncteur (11), et par le raccordement électrique de ces deux blocs au moyen de conducteurs de liaison connectés, au moment dudit assemblage, à des bornes de raccordement (13) assurant la liaison électrique desdits deux blocs, ce disjoncteur (10) étant pourvu d'un cache-bornes (14) agencé pour masquer lesdites bornes de raccordement lorsque les deux blocs sont assemblés et leur raccordement électrique réalisé, et pourvu d'au moins une ouverture (15) pour l'engagement de moyens de verrouillage, caractérisé en ce que lesdits moyens de verrouillage (20, 30) sont agencés pour être prémontés sur le cache-bornes (14) et comportent des moyens d'inviolabilité conçus pour générer une trace visible permanente dans lesdits moyens de verrouillage (20, 30) en cas de démontage.

2. Disjoncteur selon la revendication 1, caractérisé en ce que lesdits moyens de verrouillage comportent un cavalier constitué d'au moins un élément (21, 22; 30) encliquetable dans une ouverture appropriée (15a, 15b; 33) du cache-bornes (14).

3. Disjoncteur selon la revendication 2, caractérisé en ce que ledit cavalier comporte deux éléments encliquetables (21, 22) de longueurs différentes, disposés parallèlement et reliés par une barrette de liaison (23).

4. Disjoncteur selon la revendication 3, caractérisé en ce que ladite barrette de liaison (23) comporte une zone fragilisée (24).

5. Disjoncteur selon la revendication 3, caractérisé en ce que les deux éléments encliquetables (21, 22) ont leur extrémité libre constituée de deux branches (21a, 21b; 22a, 22b), séparées par une fente centrale allongée (21c; 22c), qui sont chacune pourvues d'un bec latéral (25a; 25b) agencé pour coopérer avec un épaulement (26a; 26b) ménagé dans l'épaisseur de la paroi du cache-bornes pour définir respectivement des positions de prémontage et de verrouillage du cavalier.

6. Disjoncteur selon la revendication 5, caractérisé en ce que les longueurs des deux éléments encliquetables (21, 22) sont déterminées de telle manière que, dans une phase intermédiaire, l'élément le plus long (22) est disposé de telle manière que ses becs latéraux (25b) soient en appui sur les épaulements (26b) et que, dans une phase finale de mise en place, l'élément le plus court (21) est disposé de telle manière que ses becs latéraux (25a) soient en appui sur les épaulements (26a).

7. Disjoncteur selon la revendication 2, caractérisé en ce que le cavalier comporte un seul élément encliquetable (30) et que le cache-bornes comporte une ouverture unique (33) agencée pour que, dans la position de verrouillage, ledit élément soit entièrement encastré dans ladite ouverture.

8. Disjoncteur selon la revendication 7, caractérisé en ce que ledit élément encliquetable (30) comporte à l'une de ses extrémités deux branches (31a, 31b)) séparées par une fente centrale allongée (32), chacune de ces branches étant pourvue d'un bec latéral (34) agencé pour coopérer avec un épaulement (35) ménagé dans l'épaisseur de la paroi du cache-bornes (14) en vue de définir une position de prémontage.

9. Disjoncteur selon l'une quelconque des revendications 2 à 8, caractérisé en ce que chaque élément encliquetable (21,22; 30) comporte deux extrémités arrondies ménagées sur les bords extérieurs des branches (21a, 21b, 22a, 22b; 31a, 31b) qui composent cette extrémité.

## Patentansprüche

1. Mehrpoliger Fehlerstromleistungsschalter, der durch baukastenartiges seitliches Aneinanderbauen eines Fehlerstromschutzblocks (12) und eines Leistungsschalterblocks (11) sowie durch den elektrischen Anschluß dieser beiden Blöcke mit Hilfe von Verbindungsleitern gebildet wird, die zum Zeitpunkt des genannten Aneinanderbaus an, den elektrischen Anschluß der beiden genannten Blöcke gewährleistende Anschlußklemmen (13) angeschlossen werden, wobei dieser Leistungsschalter (10) eine Klemmenabdeckung (14) aufweist, die dazu dient, die genannten Anschlußklemmen nach dem Aneinanderbauen der beiden genannten Blöcke sowie der Herstellung ihrer elektrischen Verbindung abzudecken, und die mindestens eine Öffnung (15) zur Aufnahme von Verriegelungsmitteln aufweist, dadurch gekennzeichnet, daß die genannten Verriegelungsmittel (20, 30) dazu ausgelegt sind, in der Klemmenabdeckung (14) vormontiert zu werden, und Mittel zum Schutz gegen unbefugte Eingriffe umfassen, die dazu dienen, bei einem Ausbau dauerhafte sichtbare Spuren in den genannten Verriegelungsmitteln (20, 30) zu hinterlassen.

2. Leistungsschalter nach Anspruch 1, dadurch gekennzeichnet, daß die genannten Verriegelungsmittel einen Stecker umfassen, der aus mindestens einem Schnappelement (21, 22; 30) besteht, das in eine entsprechende Öffnung (15a, 15b; 33) der Klemmenabdeckung (14) eingeschnappt werden kann.

3. Leistungsschalter nach Anspruch 2, dadurch gekennzeichnet, daß der Stecker zwei, parallel zueinander angeordnete und über einen Verbindungssteg (23) miteinander verbundene Schnappelemente (21, 22) unterschiedlicher Länge umfaßt.

4. Leistungsschalter nach Anspruch 3, dadurch gekennzeichnet, daß der genannte Verbindungssteg (23) einen Bereich verminderter Festigkeit (24) aufweist.

5. Leistungsschalter nach Anspruch 3, dadurch gekennzeichnet, daß die freien Enden der beiden Schnappelemente (21, 22) in Form von zwei Schenkeln (21a, 21b; 22a, 22b) ausgebildet sind, die durch einen Mittellängsspalt (21c; 22c) voneinander getrennt sind und jeweils eine seitlich angeordnete Nase (25a; 25b) aufweisen, welche dazu dient, mit einer, in der Dickenausdehnung der Wand der Klemmenabdeckung ausgebildeten Schulter (26a; 26b) zusammenzuwirken, um Vormontagestellungen bzw. eine Verriegelungsstellung des Steckers zu definieren.

6. Leistungsschalter nach Anspruch 5, dadurch gekennzeichnet, daß die Längen der beiden Schnappelemente (21, 22) so bemessen sind, daß in einer Zwischenphase das längere Element (22) eine Stellung aufweist, in der sich seine seitlichen Nasen (25b) auf den Schultern (26b) abstützen, und in einer Endphase des Einbauvorgangs das kürzere Element (21) eine Stellung aufweist, in der sich seine seitlichen Nasen (25a) auf den Schultern (26a) abstützen.

7. Leistungsschalter nach Anspruch 2, dadurch gekennzeichnet, daß der Stecker nur ein Schnappelement (30) umfaßt und die Klemmenabdeckung eine einzige Öffnung (33) aufweist, die so ausgelegt ist, daß das genannte Element in der Verriegelungsstellung vollständig in die genannte Öffnung eingesteckt ist.

8. Leistungsschalter nach Anspruch 7, dadurch gekennzeichnet, daß das genannte Schnappelement (30) an einem seiner Enden zwei Schenkel (31a, 31b) aufweist, die durch einen Mittellängsspalt (32) voneinander getrennt sind, wobei an jedem dieser Schenkel eine seitlich angeordnete Nase (34) ausgebildet ist, die dazu dient, mit einer in der Dickenausdehnung der Wand der Klemmenabdeckung (14) ausgebildeten Schulter zusammenzuwirken, um so eine Vormontagestellung zu definieren.

9. Leistungsschalter nach irgendeinem der Ansprüche 2 bis 8, dadurch gekennzeichnet, daß jedes Schnappelement (21, 22; 30) zwei abgerundete Enden aufweist, die an den Außenrändern der diese Enden bildenden Schenkel (21a, 21b, 22a, 22b; 31a, 31b) ausgebildet sind.

## Claims

1. A multipole differential circuit breaker formed by modular side by side assembly of a differential trip unit (12) and a circuit breaker unit (11), and by electrical connection of these two units by means of connecting conductors connected, at the time said assembly takes place, to connection terminals (13) performing electrical connection of said two units, this circuit breaker (10) being provided with a terminal cover (14) arranged to mask said connection terminals when the two units are assembled and their electrical connection performed, and provided with at least one opening (15) for insertion of locking means, characterized in that said locking means (20, 30) are arranged to be pre-assembled on the terminal cover (14) and comprise tamperproof means designed to generate a permanent visible trace in said locking means (20, 30) in case of disassembly.

2. The circuit breaker according to claim 1, characterized in that said locking means comprise a jumper formed by at least one clipping element (21, 22; 30) which clips into a suitable opening (15a, 15b; 33) of the terminal cover (14).

3. The circuit breaker according to claim 2, characterized in that said jumper comprises two clipping elements (21, 22) of different lengths, arranged in parallel and connected by a connecting strip (23).

4. The circuit breaker according to claim 3, characterized in that said connecting strip (23) comprises a fragilised zone (24).

5. The circuit breaker according to claim 3, characterized in that the two clipping elements (21, 22) have their free end formed by two branches (21a, 21b; 22a, 22b), separated by an elongate central slot (21c; 22c), which are each provided with a lateral nose (25a; 25b) arranged to operate in conjunction with a shoulder (26a; 26b) arranged in the thickness of the wall of the terminal cover to define respectively pre-assembly and locking positions of the jumper.

6. The circuit breaker according to claim 5, characterized in that the lengths of the two clipping elements (21, 22) are determined in such a way that, in an intermediate phase, the longer element (22) is arranged in such a way that its lateral noses (25b) are pressing on the shoulders (26b) and that, in a final fitting phase, the shorter element (21) is arranged in such a way that its lateral noses (25a) are pressing on the shoulders (26a).

7. The circuit breaker according to claim 2, characterized in that the jumper comprises a single clipping element (30) and that the terminal cover comprises a single opening (33) arranged so that, in the locking position, said element is fully engaged in and flush with said opening.

8. The circuit breaker according to claim 7, characterized in that said clipping element (30) comprises at one of its ends two branches (31a, 31b) separated by an elongate central slot (32), each of these branches being provided with a lateral nose (34) arranged to operate in conjunction with a shoulder (35) arranged in the thickness of the wall of the terminal cover (14) in order to define a pre-assembly position.

9. The circuit breaker according to any one of the claims 2 to 8, characterized in that each clipping element (21, 22; 30) comprises two rounded ends arranged on the extemal edges of the branches (21a, 21b, 22a; 31a, 31b) which make up this end.
